# EUROPÄISCHE PATENTSCHRIFT

(11) **EP 2 703 967 B1**
(45) Veröffentlichungstag und Bekanntmachung des Hinweises auf die Patenterteilung: **30.10.2019**
(21) Anmeldenummer: 12182715.8
(22) Anmeldetag: 03.09.2012
(51) Int. Cl.: G06F 3/042, G06F 1/3234, G06F 3/041

(54) **Bedieneinrichtung für ein technisches System**
Operating device for a technical system
Dispositif de commande pour un système technique

(43) Veröffentlichungstag der Anmeldung: 05.03.2014
(73) Patentinhaber: Siemens Aktiengesellschaft, 80333 München (DE)
(72) Erfinder: Jöhnßen, Oliver, 91058 Erlangen (DE)

(56) Entgegenhaltungen:
- US-A1- 2004 173 671
- US-A1- 2009 128 529
- US-A1- 2010 060 611
- US-A1- 2011 074 737
- US-A1- 2012 162 110
- US-B2- 8 013 949

## Beschreibung

Die Erfindung betrifft eine Bedieneinrichtung für ein technisches System sowie ein entsprechendes technisches System.

Bedieneinrichtungen mit berührungsempfindlichen Anzeigefeldern werden häufig an Orten betrieben, an denen die Beleuchtungsverhältnisse stark variieren, z.B. in Automobilherstellungswerken, in denen großflächig Fenster eingebaut sind, um das Tageslicht zu nutzen und die Kosten für Beleuchtung zu reduzieren. Zur Gewährleistung einer guten Ablesbarkeit des Anzeigefelds ist es aus dem Stand der Technik bekannt, das Anzeigefeld in Abhängigkeit von dem einfallenden Umgebungslicht zu dimmen. Diese Anpassung kann z.B. automatisch durch eine Photodiode erfolgen, welche außerhalb des Anzeigefelds positioniert ist und die Intensität der Umgebungshelligkeit erfasst. Bei entsprechender Abnahme der Umgebungshelligkeit wird eine Hintergrundbeleuchtung des Anzeigefelds vermindert und hierdurch das Anzeigefeld gedimmt, wodurch eine Blendung eines Bedieners vermieden wird. Nimmt hingegen die Umgebungshelligkeit zu, wird durch Verstärkung der Hintergrundbeleuchtung das Anzeigefeld erhellt, um hierdurch eine gute Ablesbarkeit bei hoher Umgebungshelligkeit zu gewährleisten.

Die Anpassung der Helligkeit eines Anzeigefelds über separate Photosensoren weist den Nachteil auf, dass zusätzliche Hardware-Komponenten in die Bedieneinrichtung integriert werden müssen. Insbesondere muss zusätzlicher Bauraum, z.B. in einem Rahmen um das Anzeigefeld, vorgesehen sein, was zu einer Vergrößerung der Bedieneinrichtung bzw. zu einer Verkleinerung der Anzeigefläche der Bedieneinrichtung führt.

Die Druckschrift US 2012/162110 A1 offenbart ein berührungsempfindliches Display mit einem separaten optischen Sensor neben dem Display. Der optische Sensor erfasst das Umgebungslicht, wobei eine Veränderung des Umgebungslichts zu einer Anpassung der Hintergrundbeleuchtung des Displays führt, sofern der optische Sensor in einem vorbestimmten Zeitfenster nicht nochmals eine Veränderung des Umgebungslichts detektiert.

In der Druckschrift US 2004/173671 A1 ist ein Display offenbart, bei dem über einen separaten Sensor das Umgebungslicht erfasst wird und bei einer Veränderung des Umgebungslichts die Hintergrundbeleuchtung des Displays angepasst wird.

Aufgabe der Erfindung ist es, eine Bedieneinrichtung für ein technisches System zu schaffen, deren Anzeigefeld auf einfache Weise an sich ändernde Umgebungslichtverhältnisse automatisch angepasst werden kann.

Diese Aufgabe wird durch die Bedieneinrichtung gemäß Patentanspruch 1 gelöst. Weiterbildungen der Erfindung sind in den abhängigen Ansprüchen definiert.

Die erfindungsgemäße Bedieneinrichtung dient zur Bedienung eines technischen Systems und umfasst hierzu ein berührungsempfindliches Anzeigefeld mit einer Beleuchtungseinrichtung zur Hintergrundbeleuchtung des Anzeigefelds und einer Vielzahl von optischen Sensoren zur Detektion der Intensität von auf das Anzeigefeld fallenden Lichts im sichtbaren und/oder ultravioletten Spektrum. Die Bedieneinrichtung ist derart ausgestaltet, dass über Veränderungen der detektierten Lichtintensität Berührungen des Anzeigefelds durch zumindest einen Finger eines Bedieners erfasst werden und an die Berührungen gekoppelte Bedienbefehle generiert werden, wobei zumindest ein Teil der Bedienbefehle Steuerbefehle für das technische System sind. Der Begriff des technischen Systems ist dabei weit zu verstehen und kann jede Art von technischem Gerät bzw. technischer Einrichtung umfassen. Insbesondere kann die Bedieneinrichtung auch Teil des technischen Systems sein, z.B. das Display eines Tablet-PCs.

Die Bedieneinrichtung der Erfindung zeichnet sich dadurch aus, dass im Falle, dass ein oder mehrere Kriterien umfassend das Kriterium erfüllt sind, dass die Veränderung der detektierten Lichtintensität keiner Berührung des Anzeigefelds zuordenbar ist, die Hintergrundbeleuchtung mittels der Beleuchtungseinrichtung verändert wird. Die Hintergrundbeleuchtung wird dabei verstärkt, wenn die Veränderung der detektierten Lichtintensität einer Erhöhung der Lichtintensität entspricht. Demgegenüber wird die Hintergrundbeleuchtung vermindert, wenn die Veränderung der detektierten Lichtintensität einer Verminderung der Lichtintensität entspricht.

In der erfindungsgemäßen Bedieneinrichtung wird ein an sich bekanntes Anzeigefeld in der Form eines optischen Touch-Screens derart erweitert, dass über die Detektion der sich verändernden Lichtintensität nicht nur eine Berührung des Anzeigefelds, sondern auch eine Veränderung der Umgebungshelligkeit erfasst werden kann, welche zu einer entsprechenden Anpassung der Hintergrundbeleuchtung führt, so dass das Anzeigefeld sowohl bei heller als auch dunkler Umgebungsbeleuchtung gut ablesbar ist. Die Erfindung beruht auf der Erkenntnis, dass in einem optischen Touch-Screen bereits verbaute optische Sensoren zur Erfassung der Umgebungshelligkeit genutzt werden können. Dabei werden solche Veränderungen der über die optischen Sensoren detektierten Lichtintensität, die keiner Berührung des Anzeigefelds zugeordnet werden können und z.B. über Auswertung des Schattenwurfes mittels Software identifiziert werden können, als ein Indikator für eine Veränderung der Umgebungshelligkeit verwendet. Die Erkennung von Berührungen des Anzeigefelds mittels optischer Sensoren ist dabei an sich bekannt und wird im Folgenden nicht weiter beschrieben.

Wie bereits oben erwähnt, kann die erfindungsgemäße Bedieneinrichtung für beliebige technische Systeme eingesetzt werden. In einer besonders bevorzugten Ausführungsform dient die Bedieneinrichtung zur Bedienung einer industriellen Automatisierungsanlage oder eines Teils einer industriellen Automatisierungsanlage. Die Automatisierungsanlage kann dabei z.B. zur Fertigungsautomatisierung oder zur Prozessautomatisierung vorgesehen sein.

In einer weiteren bevorzugten Ausführungsform umfassen das oder die Kriterien, welche zur Anpassung der Hintergrundbeleuchtung erfüllt sein müssen, ferner eines oder mehrere der folgenden Kriterien:
- die Veränderung der detektierten Lichtintensität tritt in einem Bereich des Anzeigefelds auf, dessen Größe einen vorbestimmten prozentualen Anteil des Anzeigefelds überschreitet, wobei der vorbestimmte prozentuale Anteil beispielsweise bei 20 % oder höher, insbesondere bei 50 % oder höher liegt;
- der Bereich des Anzeigefelds, in dem die Veränderung der detektierten Lichtintensität auftritt, weist eine vorbestimmte Form auf, z.B. in Gestalt einer Wolke bzw. eines Rechtecks (Schatten durch Fenster) und dergleichen;
- der Bereich des Anzeigefelds, in dem die Veränderung der detektierten Lichtintensität auftritt, kann nicht der Form eines oder mehrerer Finger und/oder einer Hand und/oder eines Arms des Bedieners zugeordnet werden.

Mit den oben beschriebenen zusätzlichen Kriterien können Fehler bei der Erfassung einer sich verändernden Umgebungshelligkeit vermieden werden.

In einer weiteren Ausgestaltung der erfindungsgemäßen Bedieneinrichtung ist die Veränderung der Hintergrundbeleuchtung mittels der Beleuchtungseinrichtung umso größer, je größer der Bereich des Anzeigefelds ist, in dem die Veränderung der detektierten Lichtintensität auftritt, und/oder je größer die Veränderung der detektierten Lichtintensität ist. Hierdurch wird die Helligkeit des Anzeigefelds in geeigneter Weise an die Größe bzw. Stärke einer Lichtveränderung angepasst.

In einer weiteren möglichen Ausgestaltung der erfindungsgemäßen Bedieneinrichtung bewirkt die Veränderung der Hintergrundbeleuchtung ein Ausschalten des Anzeigefelds, falls die Veränderung der detektierten Lichtintensität zu einem Intensitätswert unterhalb eines Schwellwerts führt. Hierdurch wird eine Energieeinsparung erreicht, wenn die Umgebung dunkel ist. In diesem Fall kann davon ausgegangen werden, dass die Bedieneinrichtung aktuell nicht durch einen Bediener bedient wird.

In einer weiteren Ausführungsform ist die Bedieneinrichtung derart ausgestaltet, dass die Bedieneinrichtung und/oder zumindest ein Teil des technischen Systems in einen Schlaf-Modus übergehen, falls der Intensitätswert der detektierten Lichtintensität länger als eine vorbestimmte Zeitspanne unterhalb des obigen Schwellwerts liegt, der zum Ausschalten des Anzeigefelds geführt hat. Der Begriff des Schlaf-Modus ist dabei weit zu verstehen und kann jede Art von Stand-by-Zustand bzw. Ruhezustand der Bedieneinrichtung bzw. des technischen Systems umfassen. Vorzugsweise wird das Anzeigefeld dabei wieder eingeschaltet und/oder der Schlaf-Modus wieder beendet, wenn wieder eine Veränderung der detektierten Lichtintensität in der Form einer Erhöhung der Lichtintensität auftritt, so dass das oder die obigen Kriterien, gemäß denen die Hintergrundbeleuchtung verändert wird, erfüllt sind.

In einer vorteilhaften Weiterbildung der Erfindung ist die Bedieneinrichtung derart ausgestaltet, dass eine Annäherung einer Hand und/oder eines Arms des Bedieners an das Anzeigefeld über eine Veränderung der detektierten Lichtintensität erfasst werden kann, wobei im Falle, dass das Anzeigefeld abgeschaltet ist, das Anzeigefeld bei einer erfassten Annäherung der Hand und/oder des Arms eingeschaltet wird. Entsprechende Verfahren zur Detektion einer Hand bzw. eines Arms sind dabei an sich aus dem Stand der Technik bekannt. Dabei wird mit der vorliegenden Ausführungsform erreicht, dass bereits bei der Detektion der Annäherung der Hand bei noch nicht erfolgter Berührung des Anzeigefelds ein Einschalten des Anzeigefelds bewirkt wird, wodurch Fehlbedienungen vermieden werden.

In einer weiteren Ausführungsform ist die erfindungsgemäße Bedieneinrichtung derart ausgestaltet, dass sie eine Abnahme der mit den optischen Sensoren detektierten Lichtintensität erfasst, welche im Laufe des Betriebs der Bedieneinrichtung für einen oder mehrere vorbestimmte Betriebszustände (z.B. den Normalbetriebszustand) der Bedieneinrichtung auftritt, wobei im Falle, dass die Abnahme eine vorbestimmte Schwelle überschreitet, eine Meldung, vorzugsweise an der Bedieneinrichtung, ausgegeben wird. Auf diese Weise kann eine allmähliche Verschlechterung der Hinterleuchtung des Anzeigefelds erfasst werden und der rechtzeitige Austausch der Bedieneinrichtung veranlasst werden, um hierdurch einen Totalausfall während des Betriebs der Bedieneinrichtung zu vermeiden. Die vorbestimmte Schwelle, bei deren Überschreiten eine Meldung ausgegeben wird, kann gegebenenfalls an der Bedieneinrichtung durch den Bediener eingestellt werden.

In einer besonders bevorzugten Ausführungsform ist das Anzeigefeld der Bedieneinrichtung ein an sich bekanntes TFT-Display mit optischen Sensoren, welche in das TFT-Display integriert sind und/oder darauf aufgesetzt sind.

Neben der oben beschriebenen Bedieneinrichtung umfasst die Erfindung ferner ein technisches System, welches eine oder mehrere dieser Bedieneinrichtungen umfasst.

In einer Ausführungsform eines solchen technischen Systems, in der mehrere solcher Bedieneinrichtungen vorgesehen sind, können die Bedieneinrichtungen miteinander kommunizieren, insbesondere basierend auf einem vorgegebenen Kommunikationsstandard, wie z.B. ProfiEnergy. Dabei werden eine oder mehrere Nachrichten zwischen den Bedieneinrichtungen übermittelt, falls die Veränderung der Hintergrundbeleuchtung für zumindest eine Bedieneinrichtung einem Ausschalten des Anzeigefelds der zumindest einen Bedieneinrichtung entspricht und/oder dazu führt, dass die zumindest eine Bedieneinrichtung und/oder zumindest ein Teil des technischen Systems in einen Schlaf-Modus übergehen. Die Nachrichten bewirken dabei, dass die Anzeigefelder aller Bedieneinrichtungen des technischen Systems ausgeschaltet werden und/oder dass alle Bedieneinrichtungen und/oder weitere Teile des technischen Systems in den Schlaf-Modus übergehen. Auf diese Weise kann ein energiesparender Betrieb einer Vielzahl von miteinander vernetzten Bedieneinrichtungen effektiv ausgelöst werden.

In einer Weiterbildung der oben beschriebenen Variante werden dann, wenn die Anzeigefelder aller Bedieneinrichtungen ausgeschaltet sind und/oder wenn alle Bedieneinrichtungen und/oder weitere Teile des technischen Systems in den Schlaf-Modus übergegangen sind, durch die Übermittlung von einer oder mehrerer Nachrichten zwischen den Bedieneinrichtungen die Anzeigefelder aller Bedieneinrichtungen wieder angeschaltet und/oder der Schlafmodus aller Bedieneinrichtungen und/oder aller Teile des technischen Systems wieder beendet, falls in zumindest einer Bedieneinrichtung wieder eine Veränderung der detektierten Lichtintensität in der Form einer Erhöhung der Lichtintensität auftritt, so dass das oder die obigen Kriterien zur Veränderung der Hintergrundbeleuchtung erfüllt sind.

Ausführungsbeispiele der Erfindung werden nachfolgend anhand der beigefügten Figuren detailliert beschrieben.

Es zeigen:
- FIG 1: eine Draufsicht auf die Ausführungsform einer erfindungsgemäßen Bedieneinrichtung;
- FIG 2: eine Darstellung, welche die Bedienung der Bedieneinrichtung der FIG 1 basierend auf einer Berührung mit dem Finger eines Bedieners wiedergibt;
- FIG 3: eine Schnittansicht durch die Bedieneinrichtung der FIG 1 im Falle einer hohen Umgebungshelligkeit; und
- FIG 4: eine Ansicht analog zu FIG 3 im Falle einer niedrigen Umgebungshelligkeit.

Nachfolgend wird die erfindungsgemäße Bedieneinrichtung am Beispiel einer Bedieneinrichtung für eine Automatisierungsanlage bzw. einen Teil einer Automatisierungsanlage beschrieben. Nichtsdestotrotz kann die Bedieneinrichtung auch zur Bedienung anderer technischer Systeme eingesetzt werden. Insbesondere kann die Bedieneinrichtung dabei selbst Teil des technischen Systems sein.

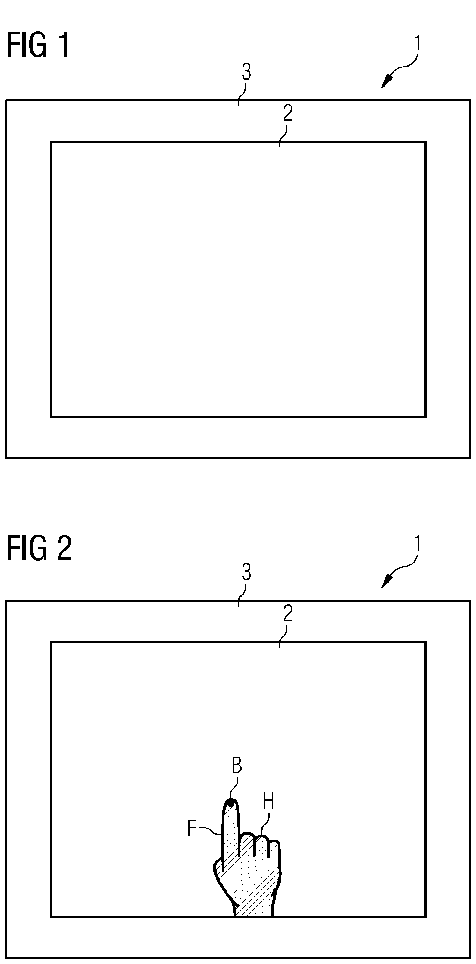

FIG 1 zeigt eine Draufsicht auf eine Ausführungsform der erfindungsgemäßen Bedieneinrichtung 1, auf der ein Anzeigefeld 2 in der Form eines Touch-Screens vorgesehen ist, der über Berührungen durch die Finger eines Bedieners bedient wird.

Dabei werden auf dem Touch-Screen angezeigte Elemente berührt bzw. geeignete Gesten durch die Hand bzw. die Finger des Bedieners auf dem Touch-Screen ausgeführt, wodurch die auf dem Anzeigefeld wiedergegebenen Funktionen, z.B. die Einstellung entsprechender Parameter der Automatisierungsanlage, ausgelöst werden. Um das Anzeigefeld 2 ist ein Spannrahmen 3 vorgesehen, mit dem die Bedieneinrichtung in einem (nicht gezeigten) Schaltschrank eingespannt wird, wobei der Schaltschrank entsprechende Komponenten zur Steuerung der Automatisierungsanlage beinhaltet.

Das Anzeigefeld 2 der FIG 1 ist ein TFT-Display mit einer entsprechenden Beleuchtungseinrichtung zur Hintergrundbeleuchtung des Displays. Dabei kann die Helligkeit der Hintergrundbeleuchtung in Abhängigkeit der Umgebungshelligkeit geeignet angepasst werden, um immer eine gute Ablesbarkeit des Anzeigefelds 2 zu gewährleisten. Herkömmlicherweise werden hierzu entsprechende Photosensoren verwendet, die außerhalb des Anzeigefelds 2 im Rahmen 3 angeordnet sind. Dies ist wiederum mit einem erhöhten Platzbedarf im Rahmen 3 sowie mit erhöhten Hardware- und Typprüf-Kosten durch Integration eines zusätzlichen Sensors verbunden.

In der erfindungsgemäßen Bedieneinrichtung werden nunmehr Photosensoren innerhalb des Anzeigefelds 2, welche herkömmlicherweise rein zur Detektion von Berührungen des Anzeigefelds dienen, auch zur Erfassung der Umgebungshelligkeit und einer damit verbundenen Anpassung der Hintergrundbeleuchtung eingesetzt. Dabei ist zu berücksichtigen, dass zur Detektion von Berührungen auf dem Anzeigefeld 2 der FIG 1 optische Signale ausgewertet werden, welche durch entsprechende Photosensoren im Anzeigefeld erfasst werden. Das Anzeigefeld ist somit ein optischer Touch-Screen, der an sich aus dem Stand der Technik bekannt ist, nunmehr jedoch um die Funktionalität der Anpassung der Hintergrundbeleuchtung erweitert ist.

FIG 2 zeigt zur Verdeutlichung die Detektion der Berührung einer Hand H eines Bedieners auf dem Anzeigefeld 2. Die Berührung B findet dabei über den Finger F der Hand H statt, wobei die Berührung in an sich bekannter Weise mit Software festgestellt wird. Dabei wird die Veränderung der Intensität entsprechender Photosensoren aufgrund der über dem Anzeigefeld befindlichen Hand H erfasst, worüber mit an sich bekannten Verfahren dann entsprechende Berührungen festgestellt werden können. In FIG 2 ist lediglich eine einzelne Berührung mit der Fingerspitze des Zeigefingers F wiedergegeben. Nichtsdestotrotz können durch optische Touch-Screens gegebenenfalls auch Bedienaktionen durch gleichzeitige Berührung mit mehreren Fingern sowie Bediengesten durch Bewegung der Finger auf dem Anzeigefeld erfasst werden.

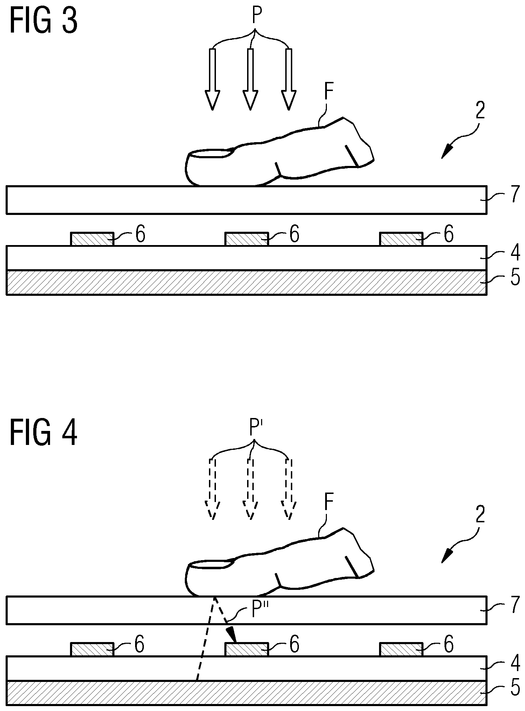

FIG 3 zeigt eine Schnittansicht durch einen Teil des Anzeigefelds 2 der FIG 1. Das Anzeigefeld umfasst dabei ein TFT-Display 4 mit einer Vielzahl von Pixeln sowie eine lediglich schematisch angedeutete Beleuchtungseinrichtung 5, welche eine Hintergrundbeleuchtung für das TFT-Display 4 darstellt. Auf der Oberseite des Displays 4 sind in vorbestimmten Abständen mehrere Photosensoren vorgesehen, welche Licht im sichtbaren Bereich erfassen. Ferner ist oberhalb der Photosensoren eine entsprechende Schutzschicht 7 vorgesehen. In der Ausführungsform der FIG 3 ist eine Berührung des Anzeigefelds 2 über den Finger F eines Bedieners im Falle von Umgebungslicht mit hoher Helligkeit angedeutet. Das Umgebungslicht wird dabei durch die durchgezogenen Pfeile P angedeutet. Bei hoher Umgebungshelligkeit führt die Positionierung des Fingers auf der Schutzschicht 7 dazu, dass durch den Schatten des Fingers die über den darunterliegenden Photosensor erfasste Lichtintensität abnimmt. Über eine geeignete Auswertung mit entsprechender Software kann dann die Berührung mit dem Finger detektiert werden. Diese Auswertung ist an sich aus dem Stand der Technik bekannt und wird deshalb nicht im Detail erläutert.

FIG 4 zeigt in Analogie zu FIG 3 eine Schnittansicht durch einen Teil des Anzeigefelds 2 der Bedieneinrichtung 1. Ebenso wird wiederum ein Finger F des Bedieners auf der Schutzschicht 7 positioniert. Im Unterschied zu FIG 3 ist nunmehr die Helligkeit des Umgebungslichts wesentlich geringer, was durch gepunktete Pfeile P' angedeutet ist. insbesondere ist die Hintergrundbeleuchtung stärker als das Umgebungslicht. In einem solchen Szenario führt die Positionierung des Fingers F oberhalb eines Photosensors 6 nicht zu einer Abnahme der detektierten Lichtintensität, sondern zu einer Zunahme. Dies liegt daran, dass aufgrund der dominanten Hintergrundbeleuchtung Reflexionen des Lichts der Beleuchtungseinrichtung 5 am Finger F detektierbar sind, was beispielhaft durch den gestrichelten Pfeil P" angedeutet ist. Dieser Pfeil zeigt einen Strahlengang von Licht der Beleuchtungseinrichtung 5, welches am Finger F reflektiert wird und auf den mittleren Photosensor 6 fällt. Auch in dem Szenario der FIG 4 kann in an sich bekannter Weise über geeignete Software die Berührung des Anzeigefelds 2 erfasst werden, wobei nunmehr jedoch die Berührung über eine Erhöhung der detektierten Lichtintensität festgestellt wird.

In der hier beschriebenen Ausführungsform der erfindungsgemäßen Bedieneinrichtung wird die Software zur Detektion von Berührungen auf dem Anzeigefeld um die Funktionalität der Anpassung der Hintergrundbeleuchtung an das Umgebungslicht erweitert. Je stärker das Umgebungslicht ist, desto stärker wird die Intensität der Hintergrundbeleuchtung erhöht, um somit auch bei starker Lichteinstrahlung, wie z.B. bei Sonneneinstrahlung, eine gute Ablesbarkeit des Anzeigefelds zu gewährleisten. Ebenso wird bei Abnahme der Umgebungshelligkeit die Hintergrundbeleuchtung vermindert, um hierdurch eine Blendung des Bedieners zu vermeiden und weiterhin eine gute Ablesbarkeit zu gewährleisten.

In einer Variante der erfindungsgemäßen Anpassung der Hintergrundbeleuchtung wird immer dann, wenn die Detektion einer entsprechenden Veränderung der Lichtintensität über die Photosensoren 6 keiner Berührung durch den Finger eines Bedieners zugeordnet werden kann, davon ausgegangen, dass die Veränderung der Lichtintensität durch eine Veränderung des Umgebungslichts bewirkt wird. Wie oben erwähnt, wird dann bei einer Erhöhung der Lichtintensität die Hintergrundbeleuchtung verstärkt und bei einer Verminderung der Lichtintensität die Hintergrundbeleuchtung vermindert.

In einer bevorzugten Ausführungsform werden neben dem Kriterium, dass eine Intensitätsveränderung auf dem Anzeigefeld keiner Berührung zuordenbar ist, ein oder mehrere weitere Kriterien berücksichtigt, wobei nur bei Erfüllung aller Kriterien eine Anpassung der Hintergrundbeleuchtung erfolgt.

Insbesondere kann als weiteres Kriterium z.B. herangezogen werden, dass Photosensoren in einer prozentualen Mindestfläche auf dem Anzeigefeld eine Veränderung der Lichtintensität detektiert haben. Gegebenenfalls kann dieses Kriterium derart ausgestaltet sein, dass alle Photosensoren und somit das gesamte Anzeigefeld eine Veränderung der Lichtintensität erfahren. Auf diese Weise kann sehr gut zwischen einer punktuellen Lichtveränderung auf dem Anzeigefeld durch eine Berührung und einer generellen Veränderung der Lichtintensität aufgrund sich verändernder Umgebungshelligkeit unterschieden werden.

Je nach Ausführungsform sind verschiedene Varianten möglich, wie die Hintergrundbeleuchtung in Abhängigkeit von der detektierten Intensitätsveränderung auf dem Anzeigefeld angepasst wird. Gegebenenfalls kann ein Bediener hierzu auch entsprechende Einstellungen, z.B. über das Betriebssystem der Bedieneinrichtung, vornehmen. Hierdurch wird dem Bediener die Möglichkeit gegeben, die automatische Dimmung des Anzeigefelds in Abhängigkeit von seinen Bedürfnissen einzustellen.

In einer Variante der Erfindung wird der Dimmungsgrad bei der Detektion einer entsprechenden Abnahme der Lichtintensität in Abhängigkeit von der Größe der abgedunkelten Fläche auf dem Anzeigefeld angepasst. Zum Beispiel kann ein Dimmungsgrad von 35 % (d.h. eine Abnahme der Stärke der Hintergrundbeleuchtung um 35 % gegenüber maximaler Beleuchtungsstärke) eingestellt werden, wenn 75 % der Fläche abgedunkelt sind. Anstatt der Größe der abgedunkelten Fläche kann ferner auch die Stärke der Abnahme der Lichtintensität als Kriterium für den Dimmungsgrad herangezogen werden. Zum Beispiel kann ein Dimmungsgrad von 50 % eingestellt werden, wenn die über die Photosensoren detektierte Intensität auf 50 % einer maximal detektierbaren Intensität abgenommen hat.

Ein weiteres Kriterium für die Anpassung der Hintergrundbeleuchtung kann z.B. darin bestehen, dass eine Anpassung der Hintergrundbeleuchtung nur dann erfolgt, wenn bestimmte Muster auf dem Anzeigefeld erkannt werden, wie z.B. eine Wolke oder ein Rechteck, wobei das Rechteck z.B. einen Lichteinfall in eine Werkshalle über ein entsprechendes Fenster repräsentieren kann. Ebenso kann eine Anpassung der Umgebungshelligkeit dann nicht erfolgen, wenn als Muster auf dem Anzeigefeld eine Hand oder ein Arm eines Bedieners erkannt werden, welche lediglich eine Bedienaktion und keine Veränderung der Umgebungshelligkeit vermuten lassen.

In einer weiteren Ausgestaltung kann das Anzeigefeld der Bedieneinrichtung optional ganz abgeschaltet werden, wenn die über die Photosensoren detektierte Lichtintensität unter einem vorbestimmten Schwellwert liegt, der auf absolute Dunkelheit bzw. das Abschalten der Beleuchtung in einer Werkshalle hindeutet. Auf diese Weise können eine Energieeinsparung und eine Verlängerung der Lebensdauer der Bedieneinrichtung erreicht werden, wenn der Fertigungsprozess, der mit der Bedieneinrichtung gesteuert wird, z.B. in der Nacht abgeschaltet wird. Gegebenenfalls kann die Bedieneinrichtung auch in einen Stand-by- bzw. Sleep-Modus übergehen, wenn die über die Photosensoren detektierte Lichtintensität über eine vorbestimmte Zeitspanne hinweg unter dem vorbestimmten Schwellwert liegt.

Ferner kann die oben beschriebene Abschaltung des Anzeigefelds der Bedieneinrichtung bzw. der Übergang in den Sleep-Modus generell zur Abschaltung der Anzeigefelder aller Bedieneinrichtungen bzw. zum Einstellen des Sleep-Modus in allen Bedieneinrichtungen der Automatisierungsanlage führen, z.B. indem zwischen den Bedieneinrichtungen der Anlage Befehle basierend auf dem an sich bekannten Standard "ProfiEnergy" ausgetauscht werden. Eine Bedieneinrichtung kann dabei als sog. ProfiEnergy-Master fungieren, wobei im Falle, dass das Anzeigefeld dieser Bedieneinrichtung aufgrund der Abnahme der Umgebungshelligkeit ausgeschaltet wird und anschließend die Bedieneinrichtung in den Sleep-Modus übergeht, ein entsprechendes ProfiSafe-Telegramm an die anderen Bedieneinrichtungen bzw. gegebenenfalls entsprechende Server und Steuerungen der Automatisierungsanlage gesendet wird, so dass auch diese in den Stand-by- bzw. Deep-Sleep-Modus gehen. Wird anschließend das Anzeigefeld der als ProfiEnergy-Master fungierenden Bedieneinrichtung aufgrund der Zunahme der Umgebungshelligkeit wieder angeschaltet, können alle Bedieneinrichtungen bzw. Server wieder über das Aussenden eines ProfiSafe-Telegramms aufgeweckt werden.

In einer weiteren Ausgestaltung kann auch die graduelle Verschlechterung des Anzeigefelds der Bedieneinrichtung im Rahmen eines sog. "Predictive Maintenance" festgestellt werden. Dabei wird mittels entsprechender Software in der Bedieneinrichtung erfasst, wenn die über die Photosensoren detektierte Intensität für einen oder mehrere Betriebszustände (z.B. Normalbetrieb) der Bedieneinrichtung über die Betriebszeit hinweg abnimmt. Falls diese Intensität einen bestimmten Grenzwert unterschreitet, wird dem Bediener z.B. über eine Dialogmeldung oder Systemmeldung im Diagnosepuffer der Bedieneinrichtung mitgeteilt, dass die Bedieneinrichtung ausgetauscht werden soll, bevor das Anzeigefeld ganz ausfällt. Optional kann dabei der Grenzwert, ab dem eine entsprechende Meldung ausgegeben wird, durch den Bediener geeignet variiert werden.

In einer weiteren Ausführungsform der erfindungsgemäßen Bedieneinrichtung besteht ferner die Möglichkeit, dass eine Dimmung des Anzeigefelds abgeschaltet wird, bevor eine Bedienaktion durch einen Bediener über Berührung des Anzeigefelds ausgeführt wird. Dabei wird über Software die Annäherung der Hand des Bedieners an das Anzeigefeld mittels der Auswertung der über die Photosensoren detektierten Intensitätsveränderung erfasst. Wird eine solche Annäherung festgestellt, wird die Dimmung aufgehoben und somit das Anzeigefeld wieder erhellt, und zwar vor dem Ausführen der Bedienaktion. Diese Variante hat den Vorteil, dass unbeabsichtigte Bedienhandlungen vermieden werden, da das Anzeigefeld bereits vor der Berührung erhellt wird.

Die im Vorangegangenen beschriebenen Ausführungsformen der Erfindung weisen eine Reihe von Vorteilen auf. Insbesondere kann eine sinnvolle und gegebenenfalls durch den Bediener festlegbare Anpassung der Hintergrundbeleuchtung des optischen Touch-Screens einer Bedieneinrichtung erreicht werden, ohne dass dazu separate Hardware in die Bedieneinrichtung eingebaut werden muss bzw. die Abmessungen der Bedieneinrichtung verändert werden müssen. Vielmehr werden zur Anpassung der Hintergrundbeleuchtung die bereits für die Funktionalität des optischen Touch-Screens vorhandenen Photosensoren genutzt, wobei eine Unterscheidung zwischen einer Berührung des Touch-Screens und einer Veränderung der Umgebungshelligkeit über die Software in der Bedieneinrichtung erfolgen kann.

In einer speziellen Variante können mehrere erfindungsgemäße Bedieneinrichtungen über einen geeigneten Kommunikationsstandard miteinander kommunizieren, um ein Abschalten der Anzeigefelder aller Bedieneinrichtungen zu bewirken, wenn zumindest eine Bedieneinrichtung feststellt, dass die Umgebungshelligkeit unter einer bestimmten Schwelle liegt. Gegebenenfalls kann in der erfindungsgemäßen Bedieneinrichtung auch eine langfristige Abnahme der durch die Photosensoren detektierten Lichtintensitäten erfasst werden und bei Bedarf eine Meldung zum Austausch der Bedieneinrichtung ausgegeben werden. Ferner kann gegebenenfalls ein unbeabsichtigtes Auslösen von Funktionen durch Berührung vermieden werden, indem eine gedimmte Bedieneinrichtung wieder angeschaltet wird, wenn bereits nur die Annäherung einer Bedienerhand vor dem Berühren des Anzeigefelds festgestellt wird.

## Patentansprüche

1. Bedieneinrichtung für ein technisches System, umfassend ein berührungsempfindliches Anzeigefeld (2), welches eine Beleuchtungseinrichtung (5) zur Hintergrundbeleuchtung des Anzeigefelds umfasst,
wobei die Bedieneinrichtung **dadurch gekennzeichnet ist,**
**dass** das berührungsempfindliche Anzeigefeld eine Vielzahl von optischen Sensoren (6) zur Detektion der Intensität von auf das Anzeigefeld (2) fallenden Lichts im sichtbaren und/oder ultravioletten Spektrum umfasst, wobei die Bedieneinrichtung (1) derart ausgestaltet ist, dass über Veränderungen der mittels der optischen Sensoren (6) detektierten Lichtintensität auch Berührungen des Anzeigefelds (2) durch zumindest einen Finger (F) eines Bedieners erfasst werden und an die Berührungen gekoppelte Bedienbefehle generiert werden, wobei zumindest ein Teil der Bedienbefehle Steuerbefehle für das technische System sind, wobei die Bedieneinrichtung (1) ferner derart ausgestaltet ist, dass im Falle, dass ein oder mehrere Kriterien umfassend das Kriterium erfüllt sind, dass die Veränderung der detektierten Lichtintensität keiner Berührung des Anzeigefelds (2) zuordenbar ist, die Hintergrundbeleuchtung mittels der Beleuchtungseinrichtung (5) verändert wird, wobei die Hintergrundbeleuchtung verstärkt wird, wenn die Veränderung der detektierten Lichtintensität einer Erhöhung der Lichtintensität entspricht, und die Hintergrundbeleuchtung vermindert wird, wenn die Veränderung der detektierten Lichtintensität einer Verminderung der Lichtintensität entspricht.

2. Bedieneinrichtung nach Anspruch 1, **dadurch gekennzeichnet, dass** das technische System eine industrielle Automatisierungsanlage oder ein Teil einer industriellen Automatisierungsanlage ist.

3. Bedieneinrichtung nach Anspruch 1 oder 2, **dadurch gekennzeichnet, dass** das oder die Kriterien ferner ein oder mehrere der folgenden Kriterien umfassen:
- die Veränderung der detektierten Lichtintensität tritt in einem Bereich des Anzeigefelds (2) auf, dessen Größe einen vorbestimmten prozentualen Anteil des Anzeigefelds (2) überschreitet, wobei der vorbestimmte prozentuale Anteil vorzugsweise bei 20 % oder höher liegt;
- der Bereich des Anzeigefelds (2), in dem die Veränderung der detektierten Lichtintensität auftritt, weist eine vorbestimmte Form auf;
- der Bereich des Anzeigefelds (2), in dem die Veränderung der detektierten Lichtintensität auftritt, kann nicht der Form eines oder mehrerer Finger und/oder einer Hand und/oder eines Arms des Bedieners zugeordnet werden.

4. Bedieneinrichtung nach einem der vorhergehenden Ansprüche, **dadurch gekennzeichnet, dass** die Veränderung der Hintergrundbeleuchtung mittels der Beleuchtungseinrichtung (5) umso größer ist, je größer der Bereich des Anzeigefelds (2) ist, in dem die Veränderung der detektierten Lichtintensität auftritt, und/oder je größer die Veränderung der detektierten Lichtintensität ist.

5. Bedieneinrichtung nach einem der vorhergehenden Ansprüche, **dadurch gekennzeichnet, dass** die Veränderung der Hintergrundbeleuchtung einem Ausschalten des Anzeigefelds (2) entspricht, falls die Veränderung der detektierten Lichtintensität zu einem Intensitätswert unterhalb eines Schwellwerts führt.

6. Bedieneinrichtung nach Anspruch 5, **dadurch gekennzeichnet, dass** die Bedieneinrichtung (1) derart ausgestaltet ist, dass die Bedieneinrichtung (1) und/oder zumindest ein Teil des technischen Systems in einen Schlaf-Modus übergehen, falls der Intensitätswert der detektierten Lichtintensität länger als eine vorbestimmte Zeitspanne unterhalb des Schwellwerts liegt.

7. Bedieneinrichtung nach Anspruch 5 oder 6, **dadurch gekennzeichnet, dass** das Anzeigefeld (2) wieder angeschaltet wird und/oder der Schlaf-Modus wieder beendet wird, wenn wieder eine Veränderung der detektierten Lichtintensität in der Form einer Erhöhung der Lichtintensität auftritt, so dass das oder die Kriterien erfüllt sind.

8. Bedieneinrichtung nach einem der vorhergehenden Ansprüche, **dadurch gekennzeichnet, dass** die Bedieneinrichtung (1) derart ausgestaltet ist, dass eine Annäherung einer Hand (H) und/oder eines Arms des Bedieners an das Anzeigefeld (2) über eine Veränderung der detektierten Lichtintensität erfasst werden kann, wobei im Falle, dass das Anzeigefeld (2) abgeschaltet ist, das Anzeigefeld (2) bei einer erfassten Annäherung der Hand (H) und/oder des Arms eingeschaltet wird.

9. Bedieneinrichtung nach einem der vorhergehenden Ansprüche, **dadurch gekennzeichnet, dass** die Bedieneinrichtung derart ausgestaltet ist, dass sie eine Abnahme der mit den optischen Sensoren (6) detektierten Lichtintensität erfasst, welche im Laufe des Betriebs der Bedieneinrichtung (1) für einen oder mehrere vorbestimmte Betriebszustände der Bedieneinrichtung (1) auftritt, wobei im Falle, dass die Abnahme eine vorbestimmte Schwelle überschreitet, eine Meldung ausgegeben wird.

10. Bedieneinrichtung nach Anspruch 9, **dadurch gekennzeichnet, dass** die vorbestimmte Schwelle an der Bedieneinrichtung (1) einstellbar ist.

11. Bedieneinrichtung nach einem der vorhergehende Ansprüche, **dadurch gekennzeichnet, dass** das Anzeigefeld ein TFT-Display (4) mit optischen Sensoren (6) ist, welche in das TFT-Display (4) integriert sind und/oder darauf aufgesetzt sind.

12. Technisches System, **dadurch gekennzeichnet, dass** das technische System eine oder mehrere Bedieneinrichtungen (1) nach einem der vorhergehenden Ansprüche umfasst.

13. Technisches System nach Anspruch 12, **dadurch gekennzeichnet, dass** im technischen System mehrere Bedieneinrichtungen (1) vorgesehen sind, welche miteinander kommunizieren können, wobei im Falle, dass die Veränderung der Hintergrundbeleuchtung für zumindest eine Bedieneinrichtung (1) einem Ausschalten des Anzeigefelds (2) der zumindest einen Bedieneinrichtung (1) entspricht und/oder dazu führt, dass die zumindest eine Bedieneinrichtung (1) und/oder zumindest ein Teil des technischen Systems in einen Schlaf-Modus übergehen, eine oder mehrere Nachrichten zwischen den Bedieneinrichtungen (1) übermittelt werden, welche bewirken, dass die Anzeigefelder (2) aller Bedieneinrichtungen (1) ausgeschaltet werden und/oder dass alle Bedieneinrichtungen (1) und/oder weitere Teile des technischen Systems in den Schlaf-Modus übergehen.

14. Technisches System nach Anspruch 13, **dadurch gekennzeichnet, dass** dann, wenn die Anzeigefelder (2) aller Bedieneinrichtungen (1) ausgeschaltet sind und/oder wenn alle Bedieneinrichtungen (1) und/oder weitere Teile des technischen Systems in den Schlaf-Modus übergegangen sind, durch die Übermittlung von einer oder mehrerer Nachrichten zwischen den Bedieneinrichtungen (1) die Anzeigefelder (2) aller Bedieneinrichtungen wieder angeschaltet werden und/oder der Schlaf-Modus aller Bedieneinrichtungen (1) und/oder aller Teile des technischen Systems wieder beendet wird, falls in zumindest einer Bedieneinrichtung (1) wieder eine Veränderung der detektierten Lichtintensität in der Form einer Erhöhung der Lichtintensität auftritt, so dass das oder die Kriterien erfüllt sind.

## Claims

1. Operating device for a technical system, comprising a touch-sensitive display panel (2) which comprises a lighting device (5) for backlighting the display panel, wherein the operating device is **characterised in that** the touch-sensitive display panel comprises a plurality of optical sensors (6) for detecting the intensity of light falling onto the display panel (2) in the visible and/or ultraviolet spectrum, wherein the operating device (1) is designed such that it is also possible to detect when the display panel (2) is touched by at least one finger (F) of an operator by way of changes in the light intensity detected by means of the optical sensors (6) and operating commands coupled to the touches are generated, wherein at least some of the operating commands are control commands for the technical system, wherein the operating device (1) is further designed such that in the event that one or more criteria are met, including the criterion that the change in the detected light intensity cannot be associated with the display panel (2) being touched, the backlighting is changed by means of the lighting device (5), wherein the backlighting is amplified when the change in the detected light intensity corresponds to an increase in the light intensity, and the backlighting is reduced when the change in the detected light intensity corresponds to a decrease in the light intensity.

2. Operating device according to claim 1, **characterised in that** the technical system is an industrial automation system or part of an industrial automation system.

3. Operating device according to claim 1 or 2, **characterised in that** the one or more criteria further comprise one or more of the following criteria:
- the change in the detected light intensity occurs in a region of the display panel (2) whose size exceeds a predetermined percentage of the display panel (2), wherein the predetermined percentage is preferably 20% or higher;
- the region of the display panel (2) in which the change in the detected light intensity occurs has a predetermined shape;
- the region of the display panel (2) in which the change in the detected light intensity occurs cannot be associated with the shape of one or more fingers and/or a hand and/or an arm of the operator.

4. Operating device according to one of the preceding claims, **characterised in that** the larger the region of the display panel (2) in which the change in the detected light intensity occurs and/or the larger the change in the detected light intensity, the larger is the change in the backlighting by means of the lighting device (5).

5. Operating device according to one of the preceding claims, **characterised in that** the change in the backlighting corresponds to a deactivation of the display panel (2) if the change in the detected light intensity results in an intensity value below a threshold value.

6. Operating device according to claim 5, **characterised in that** the operating device (1) is designed such that the operating device (1) and/or at least a part of the technical system enter a sleep mode if the intensity value of the detected light intensity lies below the threshold for longer than a predetermined period.

7. Operating device according to claim 5 or 6, **characterised in that** the display panel (2) is activated again and/or the sleep mode is terminated again when a change again occurs in the detected light intensity in the form of an increase in the light intensity, such that the one or more criteria are met.

8. Operating device according to one of the preceding claims, **characterised in that** the operating device (1) is designed such that an approach of a hand (H) and/or an arm of the operator to the display panel (2) can be detected via a change in the detected light intensity, wherein in the event that the display panel (2) has been deactivated, the display panel (2) is activated if an approach of the hand (H) and/or the arm is detected.

9. Operating device according to one of the preceding claims, **characterised in that** the operating device is designed such that it detects a decrease in the light intensity detected with the optical sensors (6), which in the course of operation of the operating device (1) occurs for one or more predetermined operating states of the operating device (1), wherein a message is issued if the decrease exceeds a predetermined threshold.

10. Operating device according to claim 9, **characterised in that** the predetermined threshold is adjustable on the operating device (1).

11. Operating device according to one of the preceding claims, **characterised in that** the display panel is a TFT display (4) with optical sensors (6) which are integrated into the TFT display (4) and/or are placed thereon.

12. Technical system, **characterised in that** the technical system comprises one or more operating devices (1) according to one of the preceding claims.

13. Technical system according to claim 12, **characterised in that** a plurality of operating devices (1) is provided in the technical system which can communicate with each other, wherein in the event that the change in the backlighting for at least one operating device (1) corresponds to a deactivation of the display panel (2) of the at least one operating device (1) and/or causes the at least one operating device (1) and/or at least a part of the technical system to enter a sleep mode, one or more messages are transmitted between the operating devices (1), which cause the display panels (2) of all operating devices (1) to be deactivated and/or all operating devices (1) and/or further parts of the technical system to enter sleep mode.

14. Technical system according to claim 13, **characterised in that** when the display panels (2) of all operating devices (1) are deactivated and/or when all operating devices (1) and/or further parts of the technical system have entered sleep mode, by virtue of the transmission of one or more messages between the operating devices (1) the display panels (2) of all operating devices are activated again and/or the sleep mode of all operating devices (1) and/or all parts of the technical system is terminated again, if in at least one operating device (1) a change again occurs in the detected light intensity in the form of an increase in the light intensity, such that the one or more criteria are met.

## Revendications

1. Dispositif de commande d'un système technique, comprenant un panneau (2) d'affichage sensible au toucher, qui comprend un dispositif (5) d'éclairage pour l'éclairage d'arrière-plan du panneau d'affichage,
dans lequel le dispositif de commande est **caractérisé en ce que** le panneau d'affichage sensible au toucher comprend une pluralité de capteurs (6) optiques pour détecter l'intensité de la lumière incidente sur le panneau (2) d'affichage dans le spectre visible et/ou ultraviolet,
dans lequel le dispositif (1) de commande est conformé de manière à détecter, par des modifications de l'intensité de la lumière détectée au moyen des capteurs (6) optiques, également des touchers du panneau (2) d'affichage par au moins un doigt (F) d'un opérateur et pour produire des instructions de commande couplées au toucher, au moins une partie des instructions de commande étant des instructions de commande du système technique,
dans lequel
le dispositif (1) de commande est conformé, en outre, pour, dans le cas où sont satisfaits un ou plusieurs critères comprenant le critère que la modification de l'intensité de la lumière détectée ne peut pas être associée à un toucher du panneau (2) d'affichage, modifier l'éclairage d'arrière-plan au moyen du dispositif (5) d'éclairage, l'éclairage d'arrière-plan étant renforcé si la modification de l'intensité de la lumière, qui a été détectée, correspond à une augmentation de l'intensité de la lumière et l'éclairage d'arrière-plan étant diminué, si la modification de l'intensité de la lumière, qui a été détectée, correspond à une diminution de l'intensité de la lumière.

2. Dispositif de commande suivant la revendication 1,
**caractérisé en ce que** le système technique est une installation d'automatisation industrielle ou une partie d'une installation d'automatisation industrielle.

3. Dispositif de commande suivant la revendication 1 ou 2, **caractérisé en ce que** le ou les critères comprennent, en outre, un ou plusieurs des critères suivants :
- la modification de l'intensité de la lumière, qui est détectée, se produit dans une partie du panneau (2) d'affichage, dont la dimension dépasse une proportion en pourcentage déterminée à l'avance du panneau (2) d'affichage, la proportion en pourcentage déterminée à l'avance étant, de préférence, supérieure ou égale à 20 %;
- la partie du panneau (2) d'affichage, dans laquelle se produit la modification de l'intensité de la lumière, qui est détectée, a une forme déterminée à l'avance;
- la partie du panneau (2) d'affichage, dans laquelle se produit la modification de l'intensité de la lumière, qui est détectée, ne peut pas être attribuée à la forme d'un doigt ou de plusieurs doigts et/ou d'une main et/ou d'un bras de l'opérateur.

4. Dispositif de commande suivant l'une des revendications précédentes,
**caractérisé en ce que** la modification de l'éclairage d'arrière-plan, au moyen du dispositif (5) d'éclairage, est d'autant plus grande qu'est plus grande la partie du panneau (2) d'affichage, dans laquelle la modification de l'intensité de la lumière, qui est détectée, se produit et/ou que la modification de l'intensité de la lumière, qui est détectée, est plus grande.

5. Dispositif de commande suivant l'une des revendications précédentes,
**caractérisé en ce que** la modification de l'éclairage d'arrière-plan correspond à une déconnexion du panneau (2) d'affichage, si la modification de l'intensité de la lumière, qui est détectée, donne une valeur de l'intensité en dessous d'une valeur de seuil.

6. Dispositif de commande suivant la revendication 5,
**caractérisé en ce que** le dispositif (1) de commande est conformé de manière à ce que le dispositif (1) de commande et/ou au moins une partie du système technique passe dans un mode dormant, si la valeur de l'intensité de la lumière, qui est détectée, en dessous de la valeur de seuil, dure plus longtemps qu'un laps de temps défini à l'avance.

7. Dispositif de commande suivant la revendication 5 ou 6,
**caractérisé en ce que** le panneau (2) d'affichage est reconnecté et/ou il est remis fin au mode dormant, si, à nouveau, une modification de l'intensité de la lumière, qui est détectée, se produit sous la forme d'une augmentation de l'intensité de la lumière, de sorte que le ou les critères sont satisfaits.

8. Dispositif de commande suivant l'une des revendications précédentes,
**caractérisé en ce que** le dispositif (1) de commande est conformé de manière à pouvoir détecter, par une modification de l'intensité de la lumière, qui est détectée, qu'une main (H) et/ou un bras de l'opérateur se rapproche du panneau (2) d'affichage, dans lequel, dans le cas où le panneau (2) d'affichage est déconnecté, le panneau (2) d'affichage est connecté lorsqu'il est détecté que la main (H) et/ou le bras se rapproche.

9. Dispositif de commande suivant l'une des revendications précédentes,
**caractérisé en ce que** le dispositif de commande est conformé de manière à détecter une diminution de l'intensité de la lumière détectée par les capteurs (6) optiques, qui se produit au cours du fonctionnement du dispositif (1) de commande, pour un ou plusieurs états de fonctionnement déterminés à l'avance du dispositif (1) de commande, dans lequel, dans le cas où la diminution dépasse un seuil déterminé à l'avance, un avertissement est émis.

10. Dispositif de commande suivant la revendication 9,
**caractérisé en ce que** le seuil déterminé à l'avance est réglable sur le dispositif (1) de commande.

11. Dispositif de commande suivant l'une des revendications précédentes,
**caractérisé en ce que** le panneau d'affichage est un TFT Display (4) ayant des capteurs (6) optiques, qui sont intégrés au TFT Display (4) et/ou qui y sont posés.

12. Système technique, **caractérisé en ce que** le système technique comprend un ou plusieurs dispositif (s) (1) de commande suivant l'une des revendications précédentes.

13. Système technique suivant la revendication 12, **caractérisé en ce que**, dans le système technique sont prévus plusieurs dispositifs (1) de commande, qui peuvent communiquer entre eux, dans lequel, dans le cas où la modification de l'éclairage d'arrière-plan, pour au moins un dispositif (1) de commande, correspond à une déconnexion du panneau (2) d'affichage du au moins un dispositif (1) de commande, et/ou fait que le au moins un dispositif (1) de commande et/ou au moins une partie du système technique passe dans un mode dormant, un ou plusieurs messages sont transmis entre les dispositifs (1) de commande, lesquels font que les panneaux (2) d'affichage de tous les dispositifs (1) de commande sont déconnectés et/ou que tous les dispositifs (1) de commande et/ou d'autres parties du système technique passent en mode dormant.

14. Système technique suivant la revendication 13, **caractérisé en ce que**, lorsque les panneaux (2) d'affichage de tous les dispositifs (1) de commande sont déconnectés et/ou lorsque tous les dispositifs (1) de commande et/ou d'autres parties du système technique sont passés en mode dormant, les panneaux (2) d'affichage de tous les dispositifs de commande sont, par la transmission d'un ou de plusieurs messages entre les dispositifs (1) de commande, reconnectés et/ou il est remis fin au mode dormant de tous les dispositifs (1) de commande et/ou de toutes les parties du système technique, si, dans au moins un dispositif (1) de commande, une modification de l'intensité de la lumière, qui est détectée, se produit à nouveau sous la forme d'une augmentation de l'intensité de la lumière, de sorte que le ou les critères sont satisfaits.
